# EUROPÄISCHE PATENTSCHRIFT

(11) **EP 2 923 120 B1**
(45) Veröffentlichungstag und Bekanntmachung des Hinweises auf die Patenterteilung: **28.06.2017**
(21) Anmeldenummer: 13799245.9
(22) Anmeldetag: 25.11.2013
(51) Int. Cl.: F16H 57/025, F16H 57/033, F16H 57/04, F16H 57/029

(54) **ADAPTERBAUGRUPPE**
COUPLING ADAPTER
ADAPTATEUR DE COUPLAGE

(30) Priorität: 26.11.2012 EP 12194252
(43) Veröffentlichungstag der Anmeldung: 30.09.2015
(73) Patentinhaber: Siemens Aktiengesellschaft, 80333 München (DE)
(72) Erfinder: BOEING, Georg, 72108 Rottenburg (DE); SCHNURR, Wolfgang, 72147 Nehren (DE)
(86) Internationale Anmeldenummer: PCT/EP2013/074540
(87) Internationale Veröffentlichungsnummer: WO 2014/079998

(56) Entgegenhaltungen:
- WO-A1-2004/057732

## Beschreibung

Die Erfindung betrifft eine Adapterbaugruppe zur Verbindung einer Getriebeeinheit und einer Motoreinheit, ein Baukastensystem sowie ein Verfahren zur Herstellung eines Schmierstoffkreislaufs in einer Antriebsgruppe.

Um eine Motoreinheit mit einer Getriebeeinheit verbinden zu können, ist häufig, insbesondere im Fall einer Kombination von Motoren und Getrieben unterschiedlicher Hersteller, eine zwischen den beiden Einheiten angeordnete Adapterbaugruppe notwendig, die die jeweiligen Anschlüsse der beiden Einheiten aneinander anpasst und über eine Adapterwelle drehfest miteinander verbindet. Ein solcher Adapter zur Verbindung eines Elektromotors mit einem Getriebe ist aus der DE-A-196 37 361 (SEW-Eurodrive) 26.03.1998 und aus der US-A-5934156 (Phillips Allyn E.) 10.08.1999 bekannt, wobei letzteres Dokument als nächstliegender Stand der Technik angesehen wird.

Dabei ist die Adapterwelle der Adapterbaugruppe in der Regel in eigenen Lagern, vorzugsweise in Wälzlagern, drehbar gelagert. Es ist bekannt, zur Reibungsverminderung in diesen Lagern lebensdauergeschmierte gekapselte Lager wie z.B. 2Z-Wälzlager einzusetzen. Die Lebensdauer der Wälzlager ist durch die Lebensdauer des Schmierstoffs begrenzt. Nach Erreichen der maximalen Lebensdauer des Schmierstoffs in den Lagern muss der Schmierstoff bzw. müssen die Lager ersetzt werden, was Wartungskosten und längere Stillstandszeiten, eventuell mit einem sich daraus ergebenden Produktionsausfall, zur Folge hat.

Alternativ ist es bekannt, Nachschmiermöglichkeiten mit Fett vorzusehen. Die Nachschmierung mit Fett ist in der Regel ein manueller Vorgang, welcher in regelmäßigen Abständen zu erfolgen hat. Die Planung, Organisation und Durchführung solcher regelmäßig zu wiederholender manueller Arbeiten zur Schmierung ist mit einem erheblichen Aufwand verbunden. Zudem kann die Zugänglichkeit der Adapterbaugruppe eingeschränkt sein.

Die WO 2004/057732 A1 offenbart eine Adapterbaugruppe, die unter den Wortlaut des Oberbegriffs des Anspruchs 1 fällt.

Es ist daher die Aufgabe der vorliegenden Erfindung, eine verbesserte Adapterbaugruppe bereitzustellen.

Die Aufgabe wird gelöst durch eine Adapterbaugruppe zur Verbindung einer Getriebeeinheit und einer Motoreinheit, umfassend ein Adaptergehäuse, mindestens ein in dem Adaptergehäuse sitzendes Lager, eine in dem Lager drehbar gelagerte Adapterwelle mit einer Wellenachse, mindestens einen sich ringförmig um die Adapterwelle erstreckenden Schmierstoffraum zur Aufnahme von Schmierstoff, wobei der Schmierstoffraum mit dem Lager in Verbindung steht, so dass der Schmierstoff von dem Schmierstoffraum dem Lager zuführbar ist, und eine auf der Motorseite des Lagers die Adapterwelle umgebende Schmierstoffdichtung zur Abdichtung des Schmierstoffraums zur Motorseite der Adapterbaugruppe hin, wobei die Adapterbaugruppe mindestens einen ersten Kanal aufweist, durch welchen Schmierstoff von der Umgebung der Adapterbaugruppe dem Schmierstoffraum zuführbar ist, und wobei der Schmierstoffraum über eine getriebeseitige Öffnung der Adapterbaugruppe, über welche die Adapterwelle auf der Getriebeseite der Adapterbaugruppe zugänglich ist, eine Verbindung zu der Getriebeseite der Adapterbaugruppe aufweist und/oder die Adapterbaugruppe einen zweiten Kanal aufweist, durch welchen Schmierstoff von dem Schmierstoffraum in die Umgebung der Adapterbaugruppe abführbar ist. Die Aufgabe wird auch gelöst durch ein Verfahren zur Herstellung eines Schmierstoffkreislaufs in einer Antriebsgruppe, umfassend eine Adapterbaugruppe zur Verbindung einer Getriebeeinheit und einer Motoreinheit und eine mit der Adapterbaugruppe verbundene Getriebeeinheit, umfassend folgende Schritte: Ausbilden eines sich ringförmig um eine Adapterwelle der Adapterbaugruppe erstreckenden Schmierstoffraums zur Aufnahme von Schmierstoff, wobei der Schmierstoffraum mit mindestens einem Lager, in dem die Adapterwelle drehbar gelagert ist, in Verbindung steht, so dass der Schmierstoff von dem Schmierstoffraum dem Lager zuführbar ist; Anordnen einer die Adapterwelle umgebenden Schmierstoffdichtung auf einer Motorseite des Lagers zur Abdichtung des Schmierstoffraums zur Motorseite der Adapterbaugruppe hin; Ausbilden einer Schmierstoffzuführung zu dem Schmierstoffraum mittels mindestens eines ersten Kanals, durch welchen Schmierstoff von der Umgebung der Adapterbaugruppe dem Schmierstoffraum zuführbar ist; Ausbilden einer Schmierstoffabführung von dem Schmierstoffraum mittels einer Verbindung des Schmierstoffraums zu der Getriebeseite der Adapterbaugruppe über eine getriebeseitige Öffnung der Adapterbaugruppe, über welche die Adapterwelle auf der Getriebeseite der Adapterbaugruppe zugänglich ist, und/oder über einen zweiten Kanal; und Verbinden der Schmierstoffabführung und der Schmierstoffzuführung mittels einer Schmierstoffleitung.

Die Adapterbaugruppe kann zwei- oder mehrteilig ausgebildet sein, mit einem getriebeseitigen und einem motorseitigen Adapter. Der getriebeseitige Adapter ist zur Verbindung mit einer ersten Drehvorrichtung (engl.: rotational member) geeignet, z.B. zum Anbau an ein Getriebe; der motorseitige Adapter ist zur Verbindung mit einer zweiten Drehvorrichtung (engl.: rotational member) geeignet, z.B. zum Anbau an einen Motor. Es ist dabei möglich, dass der Adapter ein Bauteil, insbesondere einen Montageflansch, aufweist, das an ein Getriebe oder einen Motor montierbar, insbesondere anflanschbar, ist. Insbesondere kann es sich bei diesem Bauteil um eine einstückig gefertigte Baueinheit, z.B. aus Grauguss, handeln, wie ein Motorlagerschild oder eine Kupplungslaterne.

Die Begriffe "Motor" bzw. "Motoreinheit" im Sinne der vorliegenden Beschreibung sind nicht auf einen Motor, insbesondere einen Elektromotor beschränkt, sondern umfassen alle Antriebe und Antriebseinheiten zum Antrieb einer ersten Drehvorrichtung wie eines Getriebes, z.B. hydraulische Antriebe, Riemenscheiben, Kupplungen, etc. Der Begriff "Getriebe" ist analog ebenso breit zu verstehen, d.h. er umfasst alle Drehvorrichtungen, die von einer zweiten Drehvorrichtung wie einem Motor rotatorisch antreibbar sind.

Die Getriebeseite eines Lagers ist diejenige Seite des Lagers, die einem Getriebe zugewandt ist. Der Ausdruck "Motorseite" ist analog zu verstehen.

Die erfindungsgemäße Adapterbaugruppe dient als Verbindungsglied zum Verbinden einer Motorwelle einer Motoreinheit mit einer Eingangswelle eines Getriebes. Die erfindungsgemäße Adapterbaugruppe weist einen zur Motorseite der Adapterbaugruppe abgedichteten Schmierstoffraum zur Bereitstellung von Schmierstoff auf, wobei der Schmierstoff von dem der Aufnahme von Schmierstoff dienenden Schmierstoffraum zu Reibstellen in dem getriebeseitigen Lager bzw. dem motorseitigen Lager zuführbar ist. Dabei verhindert die motorseitig die Adapterwelle umgebende Schmierstoffdichtung, dass der in dem Schmierstoffraum befindliche Schmierstoff motorseitig aus dem Schmierstoffraum austritt.

Der Erfindung liegt die Idee zugrunde, einen Austausch oder Ersatz des Schmierstoffs in den Lagern der Adapterbaugruppe während des laufenden Betriebs der Adapterbaugruppe zu ermöglichen, indem der mit den Lagern in Verbindung stehende Schmierstoffraum mit einer Zuführ- und einer Entnahmeöffnung versehen wird. Auf diese Weise kann ein Schmierstoffkreislauf durch die Adapterbaugruppe ausgebildet werden. Da sich auf diese Weise nicht immer derselbe Schmierstoff in den Lagern befindet, verlängern sich folglich die Lebensdauer des Schmierstoffs und somit die Wartungsintervalle der Adapterbaugruppe. Die erfindungsgemäße Adapterbaugruppe hat somit wesentlich längere Wartungsintervalle als herkömmliche Adapterbaugruppen.

In diesem Schmierstoffkreislauf kann der Schmierstoff gereinigt werden, z.B. mithilfe eines Ölfilters. In diesem Schmierstoffkreislauf kann der Schmierstoff auch gekühlt werden, z.B. mithilfe eines Ölkühlers. Durch diese Maßnahmen können die Lebensdauer des Schmierstoffs und somit die Wartungsintervalle der Adapterbaugruppe noch weiter erhöht werden.

Die Erfindung ermöglicht eine von anderen Schmierstoffquellen unabhängige, in die Adapterbaugruppe integrierte und einfache Nachschmierung der Lager der Adapterbaugruppe durch Schmierstoffe wie Fett, insbesondere Fließfett, oder Öl. Durch die bessere Schmierung verlängert sich die Lebensdauer des Adapters bzw. der Antriebsgruppe. Die vorliegende Erfindung schafft somit eine einfache Möglichkeit, die Lebensdauer der Lager wesentlich zu verlängern und damit Wartungsintervalle zu verlängern, Wartungskosten und Betriebskosten zu verringern.

Die Erfindung nutzt die bestehende Schmierstoffraumgeometrie einer Adapterbaugruppe, um eine zusätzliche und integrierte Schmiermöglichkeit bereitzustellen. Die erfindungsgemäße Adapterbaugruppe kann ohne oder zumindest ohne wesentliche, aufwändige Modifikationen an seinen konstruktiven Baueinheiten realisiert werden. Es muss lediglich sichergestellt sein, dass Schmierstoff von dem Schmierstoffraum zu den Schmierstellen, d.h. den Lagern, gelangen kann. Dazu werden eventuell vorhandene Deckscheiben entfernt, welche als Abdichtungen auf den zu dem Schmierstoffraum hin orientierten Seitenflächen der Lager angebracht sind.

Vorteilhafte Ausgestaltungen und Weiterbildungen der Erfindung ergeben sich aus den abhängigen Ansprüchen. Dabei kann das erfindungsgemäße Verfahren auch entsprechend den abhängigen Vorrichtungsansprüchen weitergebildet sein, und umgekehrt.

Es ist möglich, dass die Adapterbaugruppe ein getriebeseitiges Lager und ein motorseitiges Lager aufweist, wobei der Schmierstoffraum mit beiden Lagern in Verbindung steht und die Schmierstoffdichtung auf der Motorseite des motorseitigen Lagers sitzt. Die Lagerung der Adapterwelle in zwei Lagern bewirkt eine Stabilisierung. Dabei wird der Schmierstoffraum so gelegt, dass er mit beiden Lagern in Verbindung steht, also beide Lager in den Schmierstoffkreislauf integriert werden können. Dazu ist es nötig, dass die Schmierstoffdichtung zur Abdichtung des Schmierstoffraums zur Motorseite hin auf der Motorseite des motorseitigen Lagers angeordnet wird.

Es ist möglich, dass der erste bzw. zweite Kanal quer zur Wellenachse der Adapterwelle durch das Adaptergehäuse verläuft. Dadurch wird die Zufuhr und Entnahme von Schmierstoff erleichtert, da die erschwerte Zugänglichkeit an den Stirn- bzw. Flanschseiten der Adapterbaugruppe umgangen wird.

Es ist möglich, dass die Schmierstoffdichtung ein Wellendichtring ist. Dies stellt eine einfache und kostengünstige, aber wirksame Dichtung dar. Durch die Dichtung wird der Schmierstoffraum zur Aufnahme von Schmierstoff zur Motorseite hin abgeschlossen, d.h., für in den Schmierstoffraum eingefüllten Schmierstoff besteht keine Möglichkeit, den Schmierstoffraum über einen anderen Weg als über die vorgesehenen Verbindungen zu dem getriebeseitigen Lager und/oder dem motorseitigen Lager zu verlassen. Der Schmierstoff ist somit gegenüber schädlichen Einflüssen wie Staub und Schmutz geschützt. Trotzdem kann Schmierstoff aus dem Schmierstoffraum zu den Lagern gelangen, wo er seine Reibung vermindernde Funktion erfüllt, und umgekehrt; d.h. ein Austausch von Schmierstoff zwischen dem Schmierstoffraum zur Aufnahme von Schmierstoff und den Lagern kann stattfinden.

Gemäß einer bevorzugten Ausgestaltung ist die die Adapterwelle umgebende Schmierstoffdichtung als ein Wellendichtring, insbesondere ein Radial-Wellendichtring mit Dichtlippe, ausgebildet. Dieser kann unmittelbar am Adapter anliegen oder radial innerhalb eines Ausgleichsrings, welcher seinerseits am Adapter anliegt, eingebaut sein.

Es ist möglich, dass der Schmierstoffkreislauf durch die Getriebeeinheit, insbesondere durch einen Ölsumpf der Getriebeeinheit, führt. Von Vorteil ist dabei, dass das Getriebeöl auch zur Schmierung der Adapterbaugruppe genutzt werden kann. Mit dieser Kombination geht auch die Nutzung von schon bestehenden Schmierstoff-Konditionierungsvorrichtungen wie Ölfilter und Ölkühler für die Schmierung der Adapterbaugruppe einher.

Es ist möglich, dass der Schmierstoffraum durch einen Ring, welcher sich zwischen dem getriebeseitigen Lager und dem motorseitigen Lager erstreckt, von einem radial weiter außen liegenden Hohlraum getrennt ist. Somit weist der zur Aufnahme von Schmierstoff vorgesehene Schmierstoffraum eine ringförmige Wand auf, welche sich zwischen dem getriebeseitigen Lager und dem motorseitigen Lager erstreckt. Diese Wand bildet eine radiale Begrenzung des Schmierstoffraums, in dem sich der Schmierstoff befindet. Somit kann verhindert werden, dass sich Schmierstoff in radial weiter außen liegende Raumbereiche oder Hohlräume verteilt, in denen der Schmierstoff keinen oder nur einen unwesentlichen Beitrag zur Nachschmierung leisten kann. Durch die den Schmierstoffraum abschließende Ringwand kann die benötigte Menge des in den Schmierstoffraum einzufüllenden Schmierstoffs verringert werden, da die Verteilung des Schmierstoffs im Wesentlichen auf die Umgebung der Lager begrenzt wird.

Gemäß einer bevorzugten Ausgestaltung ist der Ring, d.h. die ringförmige Wand, durch eine Auskragung des motorseitigen und/oder getriebeseitigen Adapters ausgebildet. Durch diese Auskragung kann eine axiale Abstützung des getriebeseitigen Lagers erfolgen, so dass das getriebeseitige Lager als ein Festlager ausgebildet ist. Eine Abdichtung eines Spaltes zwischen der Auskragung und dem getriebeseitigen Adapter gegen ein Hindurchtreten von Schmierstoff, d.h. gegen ein unerwünschtes Entweichen des Schmierstoffs aus dem Schmierstoffraum, kann durch eine geeignete Dichtung erfolgen, z.B. einen O-Ring. Es ist möglich, dass die Auskragung einstückig mit dem motorseitigen Adapter ausgebildet ist.

Es ist auch möglich, dass die ringförmige Wand durch einen Zwischenring ausgebildet ist, der zwischen die Lager eingesetzt ist. Der Zwischenring kann zur gegenseitigen axialen Abstützung der Lager dienen, wobei das getriebeseitige Lager vorzugsweise als ein Festlager ausgebildet ist. Eine Abdichtung von Spalten zwischen dem Zwischenring und den Adaptern gegen eine Passage von Schmierstoff, d.h. gegen ein unerwünschtes Entweichen des Schmierstoffs aus dem Schmierstoffraum, kann durch geeignete Dichtungen erfolgen, z.B. mittels O-Ringe.

Gemäß der Erfindung umfasst die Adapterbaugruppe mindestens einen Kanal, durch welchen Schmierstoff von der Umgebung der Adapterbaugruppe dem Schmierstoffraum zuführbar ist und/oder durch welchen Schmierstoff von dem Schmierstoffraum entnehmbar ist. Dieser Kanal kann daher auch als ein Schmierstoffversorgungskanal bezeichnet werden. Mit "Umgebung der Adapterbaugruppe" wird jeder die Adapterbaugruppe umgebende Schmierstoffraum bezeichnet. Der Kanal bietet somit eine einfache Möglichkeit, von der Umgebung der Adapterbaugruppe, d.h. von außen, Schmierstoff den innerhalb der Adapterbaugruppe angeordneten Lagern zuzuführen, ohne dass die Adapterbaugruppe geöffnet werden muss.

Es ist weiterhin möglich, dass der mindestens eine Kanal ausschließlich durch einen motorseitigen Adapter verläuft, d.h. nur in einem einzigen Bauteil der Adapterbaugruppe angeordnet ist. Somit kann für den getriebeseitigen Adapter ein Standard-Bauteil verwendet werden, während lediglich der motorseitige Adapter für die Anwendung in der Adapterbaugruppe mit einem Kanal versehen werden muss. Dies vereinfacht die Herstellung der Adapterbaugruppe und fördert die Verwendung von standardisierten, unveränderten Bauteilen.

Es ist möglich, dass ein Ende des mindestens einen Kanals am motorseitigen Lager endet. Falls der mindestens eine Kanal durch den motorseitigen Adapter verläuft, ist es vorteilhaft, dass das wellenseitige Ende des Kanals innerhalb des motorseitigen Lagers endet. Somit kann für den getriebeseitigen Adapter ein Standard-Bauteil verwendet werden, während lediglich der motorseitige Adapter für die Anwendung in der Adapterbaugruppe mit einem Kanal versehen werden muss.

Gemäß einer bevorzugten Ausgestaltung umfasst die Adapterbaugruppe mindestens zwei Kanäle, wobei ein erster Kanal der mindestens zwei Kanäle ein Einlasskanal zur Zuführung von Schmierstoff zu dem Schmierstoffraum ist und ein zweiter Kanal der mindestens zwei Kanäle ein Ablasskanal zur Entnahme von Schmierstoff aus dem Schmierstoffraum ist. Durch die kombinierte Anordnung eines Einlasskanals und eines Ablasskanals in der Adapterbaugruppe ist ein einfacher Austausch des Schmierstoffs in dem Schmierstoffraum möglich.

Über den Ablasskanal kann Schmierstoff in die Getriebeeinheit abgeleitet werden. Kombiniert man diese Ableitung von Schmierstoff über den getriebeseitigen Ablasskanal mit einer Zuleitung von Schmierstoff, vorzugsweise über einen Einlasskanal, so ist eine Umlaufschmierung realisierbar, die vorzugsweise in einem Schmierstoffversorgungskreislauf der Getriebeeinheit integrierbar ist. Der Begriff Umlaufschmierung bezeichnet einen Schmierstoffkreislauf, bestehend aus einem Reservoir, z.B. einer Ölwanne oder einem Ölsumpf in der Getriebeeinheit, einer Zuführung zur Reibstelle, z.B. dem Einlasskanal, und einer Rückführung, z.B. über den Ablasskanal. Es kann zusätzlich eine Schmierstoffaufbereitung bzw. -prozessierung, z.B. ein Ölfilter oder eine Ölkühlvorrichtung, zwischengeschaltet sein. Bei einer Umlaufschmierung kann meist mit geringeren Ölmengen im System gearbeitet werden als bei einer getrennten Schmierung von Getriebe und Adapterbaugruppe. Eine Umlaufschmierung kann in vorteilhafter Weise mit Schmieröl realisiert werden.

Es ist möglich, dass die Adapterbaugruppe ein Adapter für IEC-, NEMA- und Servo-Motoren ist, d.h. den Anbau von IEC-, NEMA- und Servo-Motoren ermöglicht (IEC = International Electrotechnical Commission; NEMA = National Electrical Manufacturers Association). Dabei kann die Adapterbaugruppe so gestaltet sein, dass im motorseitigen Adapter verschiedene Kupplungsvarianten wie elastische Kupplung, drehsteife Kupplung oder Rutschkupplung, und eine Rücklaufsperre integriert werden können. Der motorseitige Adapter kann aber auch nur für die Aufnahme der Lagerstelle der Adapterwelle ausgeführt sein. Diese Variante hat die kürzeste Baulänge und ist die preiswerteste Ausführung.

Es ist auch möglich, dass die Adapterbaugruppe den Antrieb über ein freies Wellenende ermöglicht. Dabei ist der motorseitige Adapter so ausgeführt, dass er eine Lagerstelle der Adapterwelle umfasst. Mit dieser Ausführung kann das Drehmoment mit einer Kupplung oder Riemenscheibe, welche auf dem freien Wellenende angebracht ist, in ein Getriebe eingeleitet werden.

Eine bevorzugte Weiterbildung der Erfindung ist eine Antriebsgruppe, umfassend einen Adapterbaugruppe in einer der oben angeführten Ausgestaltungen und eine Getriebeeinheit, die mit der Adapterbaugruppe verbunden ist.

Es ist möglich, dass die Antriebsgruppe einen Schmierstoffkreislauf umfasst, der von dem ersten Kanal über das mindestens eine Lager und den Schmierstoffraum, die getriebeseitige Öffnung und/oder den zweiten Kanal, die Getriebeeinheit und eine Schmierstoffleitung zurück zum ersten Kanal verläuft.

Eine weitere bevorzugte Weiterbildung der Erfindung ist ein Baukasten-System zum Ausbilden einer Adapterbaugruppe, umfassend mehrere, zum Verbinden mit unterschiedlichen Getriebeeinheiten geeignete, getriebeseitige Adapter mit je einem getriebeseitigen Lager, mehrere jeweils mit mindestens einem der getriebeseitigen Adapter verbindbare, zum Verbinden mit unterschiedlichen Motoreinheiten geeignete, motorseitige Adapter mit je einem motorseitigen Lager, und Adapterwellen zur jeweiligen drehbaren Lagerung in den Lagern.

Die unterschiedlichen Getriebeeinheiten können Getriebe unterschiedlicher Baugrößen umfassen. Die unterschiedlichen Motoreinheiten können Motoren unterschiedlicher Baugrößen umfassen.

Das erfindungsgemäße Adapterbaugruppe-Baukastensystem ermöglicht eine Vielzahl unterschiedlicher Adaptervarianten, welche alle durch eine Ausbildung eines Schmierstoffraums im Inneren der Adapterbaugruppe eine zuverlässige Schmierstoffversorgung der zur Lagerung der Adapterwelle dienenden Wälzlager sicher stellen. Dadurch wird eine wesentliche Verbesserung gegenüber herkömmlichen Adaptersystemen erreicht, bei denen eine Ausbildung eines Schmierstoffraums zur Aufnahme von Schmierstoff in allen Adaptervarianten des Baukastensystems nicht möglich ist. Im Rahmen des erfindungsgemäßen Adapterbaugruppensystems kann ein motorseitiger Adapter einer Baugröße mit unterschiedlichen getriebeseitigen Adaptern bzw. den entsprechenden Getrieben kombiniert werden. Dies wird u.a. dadurch erzielt, dass der motorseitige Adapter einer Baugröße und die unterschiedlichen getriebeseitigen Adapter eine gemeinsame Schnittstelle aufweisen. Dabei ist die motorseitige Schnittstelle des motorseitigen Adapters an die unterschiedlichen Motoren (unterschiedliche Motortypen und innerhalb jedes Motortyps unterschiedliche Baugrößen) und die getriebeseitige Schnittstelle des getriebeseitigen Adapters an die unterschiedlichen Getriebe (unterschiedliche Getriebetypen und innerhalb jedes Getriebetyps unterschiedliche Baugrößen) angepasst, die zueinander gewandten Schnittstellen je eines motorseitigen und eines entsprechenden getriebeseitigen Adapters dagegen gleich (= gemeinsame Schnittstelle).

Stellt man eine bestimmte Anzahl von motorseitigen Adaptern für unterschiedliche Motortypen und Motorbaugrößen bereit, die jeweils über eine gemeinsame Schnittstelle mit mehreren unterschiedlichen getriebeseitigen Adaptern kombinierbar sind, kann die nötige Zahl von Teilen stark reduziert werden. Durch die erfindungsgemäße Ausgestaltung der Adapterbaugruppe und durch das erfindungsgemäße Adapterbaugruppensystem können somit die Kombinationsmöglichkeiten von Motoren und Getrieben insbesondere bei reduzierter Teilezahl erhöht werden. Bei geringer Lagerhaltung sind somit viele Kombinationen von Motoren und Getrieben möglich.

Gemäß einer bevorzugten Ausgestaltung umfasst das Verfahren folgenden weiteren Schritt: Ausbilden mindestens eines Kanals, durch welchen Schmierstoff von der Umgebung der Adapterbaugruppe dem Schmierstoffraum zuführbar ist und/oder Ausbilden mindestens eines Kanals, durch welchen Schmierstoff von dem Schmierstoffraum abführbar ist. Dabei kann der mindestens eine Kanal nach dessen Ausbildung durch einen leicht entfernbaren Verschluss wieder verschlossen werden. Auf diese Weise bietet die Adapterbaugruppe zwei unterschiedliche Nutzungsmöglichkeiten: Entweder wird die Adapterbaugruppe herkömmlich genutzt, wenn der Verschluss nicht entfernt wird und somit der Kanal ungenutzt bleibt; alternativ kann die Adapterbaugruppe, nachdem der Verschluss, z.B. durch Abziehen, entfernt wurde, über den Kanal nachgeschmiert werden.

Vorzugsweise wird der mindestens eine Kanal in dem motorseitigen Adapter ausgebildet. Dabei ist es von Vorteil, wenn der mindestens eine Kanal ausschließlich in dem motorseitigen Adapter verläuft. Dies erlaubt es, als getriebeseitigen Adapter einen Standard-Adapter zu verwenden, der in keiner Weise für die Anwendung in der Adapterbaugruppe modifiziert zu sein braucht.

Es ist bevorzugt, dass das Ausbilden des mindestens einen Kanals durch ein spanabhebendes Verfahren, insbesondere durch Bohren oder Fräsen, erfolgt.

Die Motorlagerschilder der Motoreinheiten, mit denen eine erfindungsgemäße Adapterbaugruppe verbunden wird, müssen nicht modifiziert werden. Alle für die Option "längere Wartungsintervalle" erforderlichen Eigenschaften werden in das Bauteil "motorseitiger Adapter" eingebracht. Die baulichen Merkmale sind die Einbaumöglichkeit einer die Adapterwelle umgebenden Schmierstoffdichtung zur Abdichtung des Schmierstoffraums, insbesondere in Form eines Wellendichtrings (= WDR), die Gestaltung und die Einbaumöglichkeit eines den Schmierstoffraum radial umschließenden Bauteils, welches sich zwischen dem getriebeseitigen Lager und dem motorseitigen Lager erstreckt, insbesondere in Form einer Auskragung des motorseitigen Adapters oder eines zwischen die Lager eingesetzten Zwischenrings, und ferner die gusstechnische Einbringungsmöglichkeit mindestens eines Schmierstoffkanals mit der damit verbundenen Möglichkeit, diese als Option in das Gussgehäuse nachträglich durch Fertigung einzubringen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigt
- Fig. 1: eine Ansicht einer Adapterbaugruppe, die zwischen einer Getriebeeinheit und einer Motoreinheit angeordnet ist;
- Fig. 2: Schnitte von zwei unterschiedlichen Ausführungsbeispielen einer Adapterbaugruppe einer relativ langen Bauart in einer ersten Alternative;
- Fig. 3: Schnitte von zwei unterschiedlichen Ausführungsbeispielen einer Adapterbaugruppe einer relativ langen Bauart in einer zweiten Alternative;
- Fig. 4: einen Schnitt einer Adapterbaugruppe einer relativ kurzen Bauart in einer ersten Alternative;
- Fig. 5: einen Schnitt einer Adapterbaugruppe einer relativ kurzen Bauart in einer zweiten Alternative;
- Fig. 6: einen Schnitt einer Adapterbaugruppe mit einem freien Wellenende in einer ersten Alternative;
- Fig. 7: einen Schnitt einer Adapterbaugruppe mit einem freien Wellenende in einer zweiten Alternative;
- Fig. 8: eine teilweise als Schnitt dargestellte Seitenansicht einer Antriebsgruppe, umfassend einen Kupplungsadapter, eine Getriebeeinheit und eine Motoreinheit; und
- Fig. 9: eine Abfolge von Verfahrensschritten zur Herstellung eines Schmierstoffkreislaufs in einer Antriebsgruppe.

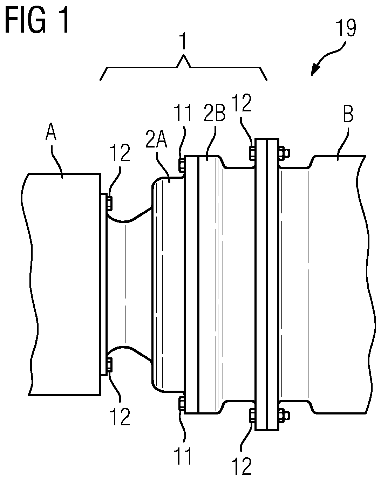

Fig. 1 zeigt eine Ansicht einer Adapterbaugruppe 1, die zwischen einer Getriebeeinheit A und einer Motoreinheit B angeordnet ist. Die Motoreinheit B kann beispielsweise als ein Elektromotor gemäß der IEC-Norm für Drehstrom-Motoren ausgebildet sein, während es sich bei der Getriebeeinheit A beispielsweise um ein individuell gefertigtes Getriebe handelt. Die Adapterbaugruppe 1 weist einen getriebeseitigen Adapter 2A und einen motorseitigen Adapter 2B auf, die mittels Verbindungsschrauben 11 miteinander verbunden sind. Bei dem getriebeseitigen Adapter 2A handelt es sich vorzugsweise um einen Standard-Motorlagerschild. Bei dem motorseitigen Adapter 2B handelt es sich vorzugsweise um eine Standard-Kupplungslaterne. Die Adapter 2A, 2B bestehen vorzugsweise aus Gusseisen, vorzugsweise aus Grauguss. Die Adapterbaugruppe 1 ist mittels Befestigungsschrauben 12 jeweils an der Getriebeeinheit A und der Motoreinheit B montiert.

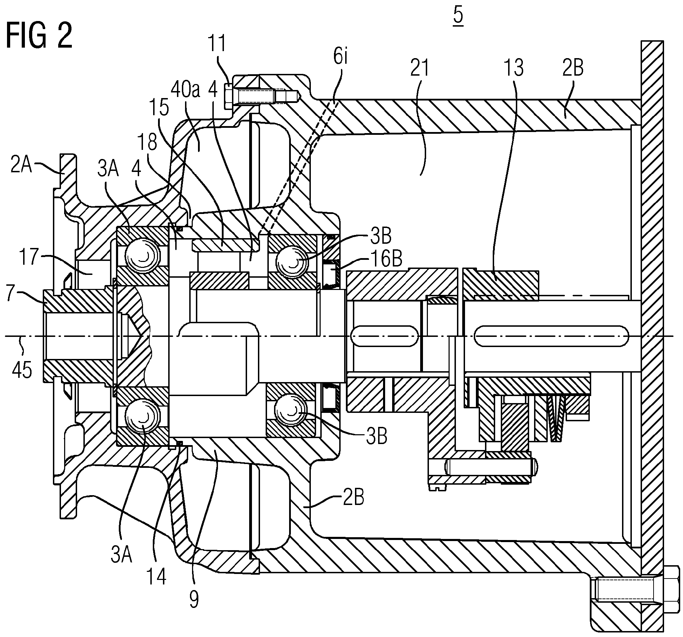

Fig. 2 zeigt Schnitte von zwei unterschiedlichen Ausführungsbeispielen einer Adapterbaugruppe 1 einer relativ langen Bauart. Da diese Ausführungsbeispiele für einen Anbau von IEC-, NEMA- oder Servo-Motoren geeignet sind, werden sie hier als "Standardausführung" bezeichnet. Die unterschiedlichen Ausführungsvarianten beziehen sich auf den Einbau von unterschiedlichen Kupplungsvarianten und einer Rücklaufsperre. Ebenso sind unterschiedliche Ausführungen einer motorseitigen Abdichtung mittels Wellendichtringe dargestellt.

Die Adapterbaugruppe 1 weist einen getriebeseitigen Adapter 2A und einen motorseitigen Adapter 2B auf, welche mithilfe von Verbindungsschrauben 11 fest miteinander verbunden sind. Jeder der beiden Adapter 2A, 2B umfasst jeweils ein Lager 3A, 3B. Das getriebeseitige Lager 3A wird auch als A-Lager, das motorseitige Lager 3B als B-Lager bezeichnet. Das getriebeseitige Lager 3A ist durch den motorseitigen Adapter 2B axial abgestützt und dadurch als Festlager ausgebildet. Das motorseitige Lager 3B ist als ein Loslager ausgebildet. Dabei kann das motorseitige Kugellager Deckscheiben aufweisen. Das getriebeseitige Kugellager wird ohne Deckscheiben gewählt, um einen axialen Durchtritt von Schmierstoff durch das Lager nicht zu behindern.

In den Lagern 3A, 3B ist eine Adapterwelle 7 drehbar gelagert, welche zur Ausbildung einer drehfesten Verbindung zwischen einer Motoreinheit und einer Getriebeeinheit, die hier nicht dargestellt sind, dient. An der Getriebeseite des getriebeseitigen Lagers 3A ist keine Schmierstoffabdichtung vorgesehen, um einen axialen Durchtritt von Schmierstoff durch das Lager 3A nicht zu behindern. An der Motorseite des motorseitigen Lagers 3B ist ein motorseitiger Wellendichtring 16B vorgesehen. Der motorseitige Wellendichtring 16B dichtet die Adapterbaugruppe zum Kupplungsraum 21 ab. Der Wellendichtring 16B ist als Radial-Wellendichtringe mit Dichtlippe ausgebildet. Der motorseitige Wellendichtring 16B kann direkt am motorseitigen Adapter 2B anliegend (untere Hälfte von Fig. 2) oder radial innerhalb eines Ausgleichsrings 30, der entlang seinem äußeren Umfang eine Nut mit einem darin eingelegten O-Ring 14 zur Abdichtung gegenüber dem motorseitigen Adapter 2B aufweist(siehe obere Hälfte von Fig. 2), im motorseitigen Adapter 2B eingebaut sein.

Es wird jeweils ein Schmierstoffraum 4 zwischen dem getriebeseitigen Lager 3A und dem motorseitigen Lager 3B gebildet, der mit einer bestimmten Menge Schmierstoff zur Schmierung der Lager 3A, 3B gefüllt sein kann.

Die Zuführung von Schmierstoff zu dem Schmierstoffraum 4 mit den damit in Verbindung stehenden Lagern 3A, 3B erfolgt über einen als Einlasskanal dienenden ersten Kanal 6i. Der Einlasskanal 6i ist in dem motorseitigen Adapter 2B als eine Bohrung 6i für die Schmierstoffzufuhr in den Schmierstoffraum 4 für die Schmierstoffaufnahme eingebracht. Die zuführende Bohrung 6i ist an der obersten Stelle im motorseitigem Adapter 2B angebracht. Die Abfuhr von Schmierstoff aus dem Schmierstoffraum 4 zu der Getriebeseite der Adapterbaugruppe 1 erfolgt entlang der Wellenachse 45 der Adapterwelle 7 über eine getriebeseitige Öffnung 17 der Adapterbaugruppe 1, über welche die Adapterwelle 7 auf der Getriebeseite der Adapterbaugruppe 1 zugänglich ist.

Durch den Kanal 6i und die Öffnung 17 ist Schmierstoff von der Umgebung 5 der Adapterbaugruppe dem Schmierstoffraum 4 zuführbar bzw. Schmierstoff von dem Schmierstoffraum 4 entnehmbar. Durch Zuführen von Schmierstoff durch den Einlasskanal 6i und gleichzeitige Abführen von Schmierstoff durch die getriebeseitige Öffnung 17 kann ein Schmierstoffkreislauf durch die Adapterbaugruppe 1 ausgebildet werden. Dabei ist immer eine ausreichende Menge Schmieröl für die Wälzlager 3A, 3B vorhanden.

In der oberen Hälfte von Fig. 2 ist ein Ausführungsbeispiel dargestellt, bei dem radial innerhalb einer Auskragung 9 des motorseitigen Adapters 2B zwischen den A- und B-Lagern 3A, 3B ein Anbau-Freilauf 15 als Rücklaufsperre und auf der Adapterwelle 7 im Bereich des motorseitigen Adapters 2B eine Kupplung 13 angeordnet ist. Dabei kann es sich um eine elastische Kupplung handeln, die lediglich der Übertragung von Drehmomenten dient. Zweck einer solchen Kupplung kann eine Entkopplung von störenden Einflüssen sein, wie axialen und/oder radialen Kräften, Schwingungen oder einem Achsversatz.

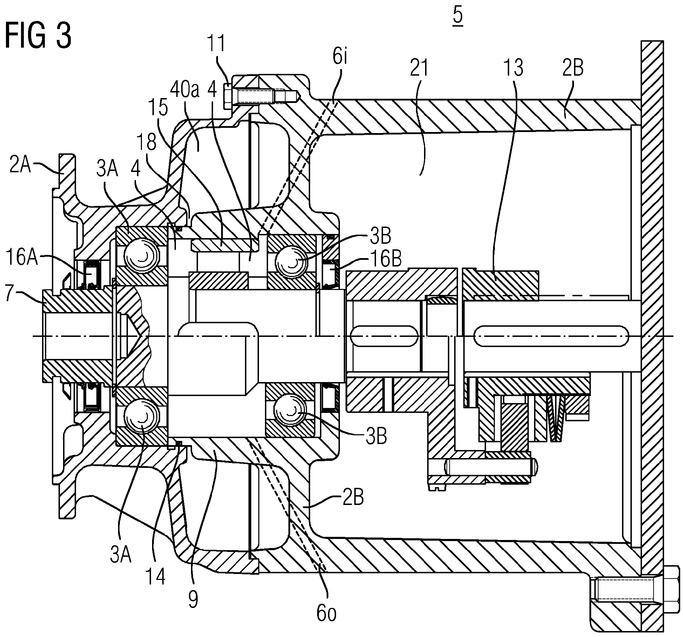

Fig. 3 zeigt in den beiden, durch die waagrechte, punktgestrichelte Linie getrennten Schnitthälften zwei unterschiedliche Ausführungsbeispiele einer Adapterbaugruppe, die ähnlich wie die in Fig. 2 dargestellten Ausführungsbeispiele ausgestaltet, aber anstatt der getriebeseitigen Öffnung 17 einen als Auslasskanal dienenden zweiten Kanal 6o durch die Adapterbaugruppe 1 aufweist, durch welchen Schmierstoff von dem Schmierstoffraum 4 in die Umgebung 5 der Adapterbaugruppe 1 abführbar ist.

An der Getriebeseite des getriebeseitigen Lagers 3A ist ein getriebeseitiger Wellendichtring 16A, sowie an der Motorseite des motorseitigen Lagers 3B ein motorseitiger Wellendichtring 16B vorgesehen. Der getriebeseitige Wellendichtring 16A dichtet die Adapterbaugruppe zum Getriebe hin ab. Der motorseitige Wellendichtring 16B dichtet die Adapterbaugruppe zum Kupplungsraum 21 ab. Die Wellendichtringe 16A und 16B sind als Radial-Wellendichtringe mit Dichtlippe ausgebildet. Der motorseitige Wellendichtring 16B kann direkt am motorseitigen Adapter 2B anliegend (untere Hälfte von Fig. 2) oder radial innerhalb eines Ausgleichsrings 30, der entlang seinem äußeren Umfang eine Nut mit einem darin eingelegten O-Ring 14 zur Abdichtung gegenüber dem motorseitigen Adapter 2B aufweist (siehe obere Hälfte von Fig. 2), im motorseitigen Adapter 2B eingebaut sein.

In dem motorseitigen Adapter 2B sind Bohrungen 6i und 6o für die Schmierstoffzufuhr in den bzw. den Ablauf aus dem Schmierstoffraum 4 für die Schmierstoffaufnahme eingebracht. Die zuführende Bohrung 6i ist an der obersten Stelle im motorseitigem Adapter 2B angebracht. Die abführende Bohrung 6o ist so am motorseitigem Adapter 2B angebracht, dass immer eine ausreichende Menge Schmieröl für die Wälzlager 3A, 3B vorhanden ist. Durch die Kanäle 6i, 6o ist Schmierstoff von der Umgebung 5 der Adapterbaugruppe dem Schmierstoffraum 4 zuführbar und/oder Schmierstoff von dem Schmierstoffraum 4 entnehmbar. Durch Zuführen von Schmierstoff durch den Einlasskanal 6i und gleichzeitige Abführen von Schmierstoff durch den Auslasskanal 6o kann ein Schmierstoffkreislauf durch die Adapterbaugruppe 1 ausgebildet werden.

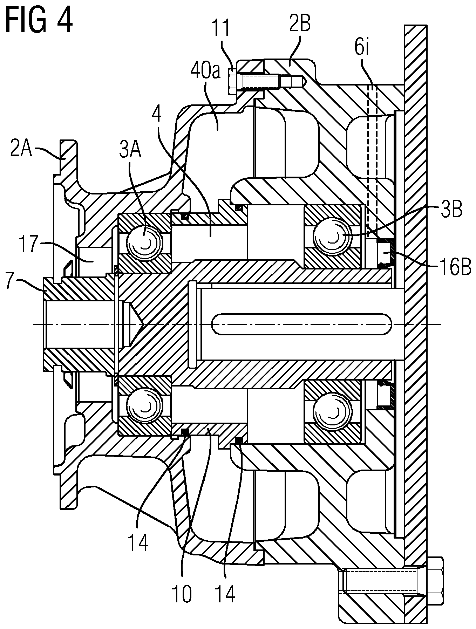

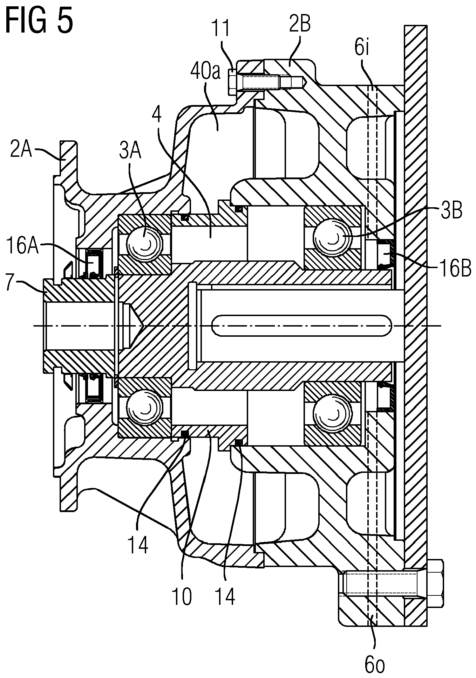

Die Fig. 4 und 5 zeigen jeweils einen Schnitt einer Adapterbaugruppe 1 in kurzer Bauweise. Der Aufbau der den Schmierkreislauf bildenden Bauteile und die Funktion ist im Wesentlichen ähnlich zu den in den Fig. 2 und 3 gezeigten Adapterbaugruppen langer Bauweise. Es wird jeweils der Schmierstoffraum 4 zwischen dem getriebeseitigen Lager 3A und dem motorseitigen Wellendichtring 16B mit einer bestimmten Menge Schmierstoff zur Schmierung der Lager 3A, 3B gefüllt. Der Schmierstoffraum 4 für die Schmierstoffaufnahme ist durch den Einbau eines Zwischenringes 10 und von O-Ringen 14 gegenüber einem radial weiter außen liegenden Schmierstoffraum 40a abgetrennt, in welchem sich kein Schmierstoff befindet.

Das getriebeseitige Lager 3A ist fixiert und somit als Festlager ausgebildet. Das motorseitige Lager 3B ist ein Loslager. Der Zwischenring 10 liegt mit einer getriebeseitigen Stirnfläche an dem getriebeseitigen Lager 3A und mit einer an seinem motorseitigen Ende angeordneten, vom Außenumfang des Rings 10 abstehenden Rippe an dem motorseitigen Adapter 2B an. Der Zwischenring 10 weist an seinem Außenumfang zwei Nuten mit eingelegten O-Ringen auf, nämlich eine Nut gegenüber einer Ringfläche des getriebeseitigen Adapters 2A und eine Nut gegenüber einer Ringfläche des motorseitigen Adapters 2A, durch welche eine Schmierstoffabdichtung des Schmierstoffraums 4 gegenüber dem radial weiter außen liegenden Hohlraum 40a ausgebildet ist.

Fig. 4 zeigt eine erste Alternative, wobei Schmierstoff über einen Einlasskanal 6i dem Schmierstoffraum 4 zugeführt und über eine getriebeseitige Öffnung 17 von dem Schmierstoffraum 4 abgeführt wird. An der Getriebeseite des getriebeseitigen Lagers 3A ist keine Schmierstoffabdichtung vorgesehen, um einen axialen Durchtritt von Schmierstoff durch das Lager 3A nicht zu behindern. An der Motorseite des motorseitigen Lagers 3B ist ein motorseitiger Wellendichtring 16B vorgesehen. Der motorseitige Wellendichtring 16B dichtet die Adapterbaugruppe zum Motor hin ab.

Durch den Kanal 6i und die Öffnung 17 ist Schmierstoff von der Umgebung 5 der Adapterbaugruppe dem Schmierstoffraum 4 zuführbar bzw. Schmierstoff von dem Schmierstoffraum 4 entnehmbar. Durch Zuführen von Schmierstoff durch den Einlasskanal 6i und gleichzeitige Abführen von Schmierstoff durch die getriebeseitige Öffnung 17 kann ein Schmierstoffkreislauf durch die Adapterbaugruppe 1 ausgebildet werden. Dabei ist immer eine ausreichende Menge Schmieröl für die Wälzlager 3A, 3B vorhanden.

Fig. 5 zeigt eine zweite Alternative, wobei Schmierstoff über einen Einlasskanal 6i dem Schmierstoffraum 4 zugeführt und über einen Auslasskanal 6o von dem Schmierstoffraum 4 abgeführt wird. In dem motorseitigen Adapter 2B sind Bohrungen 6 für die Schmierstoffzufuhr in bzw. den Schmierstoffablauf aus dem Schmierstoffraum 4 für die Schmierstoffaufnahme eingebracht. An der Getriebeseite des getriebeseitigen Lagers 3A ist ein getriebeseitiger Wellendichtring 16A, sowie an der Motorseite des motorseitigen Lagers 3B ein motorseitiger Wellendichtring 16B vorgesehen. Der getriebeseitige Wellendichtring 16A dichtet die Adapterbaugruppe zum Getriebe hin ab. Der motorseitige Wellendichtring 16B dichtet die Adapterbaugruppe zum Motor hin ab.

Durch die Kanäle 6i, 6o ist Schmierstoff von der Umgebung 5 der Adapterbaugruppe dem Schmierstoffraum 4 zuführbar und/oder Schmierstoff von dem Schmierstoffraum 4 entnehmbar. Durch Zuführen von Schmierstoff durch den Einlasskanal 6i und gleichzeitige Abführen von Schmierstoff durch den Auslasskanal 6o kann ein Schmierstoffkreislauf durch die Adapterbaugruppe 1 ausgebildet werden.

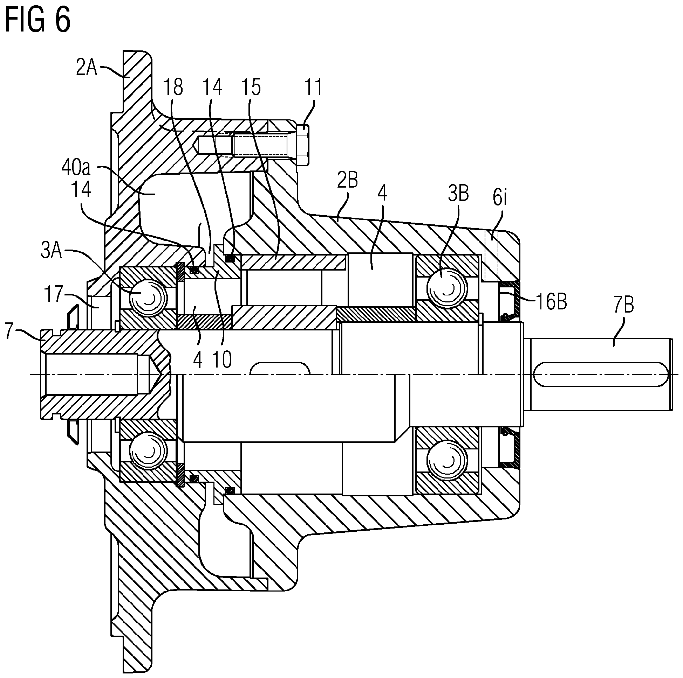

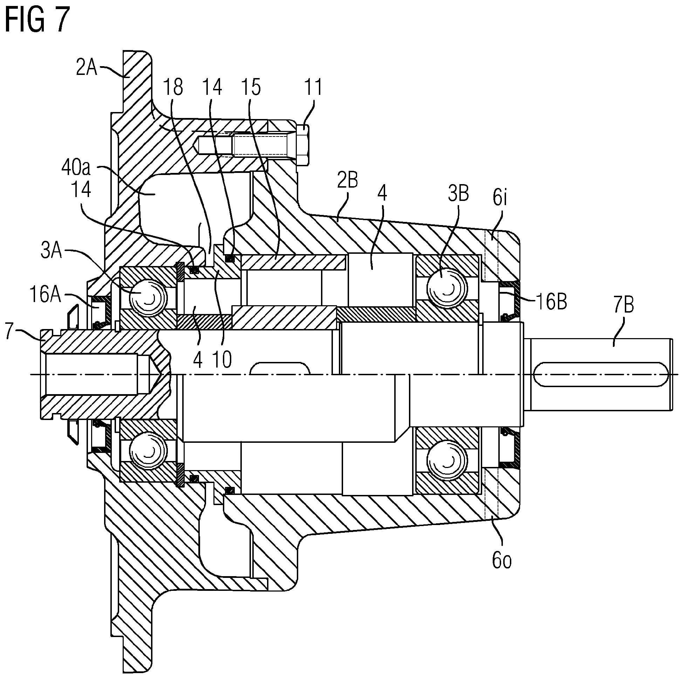

Die Fig. 6 und 7 zeigen jeweils einen Schnitt einer Adapterbaugruppe 1 mit einem freien Wellenende 7B der Adapterwelle 7. Der Aufbau der den Schmierkreislauf bildenden Bauteile und die Funktion ist im Wesentlichen ähnlich zu den in den Fig. 2 und 3 bzw. den in den Fig. 4 und 5 gezeigten Adapterbaugruppen.

Fig. 6 zeigt eine erste Alternative, wobei Schmierstoff über einen Einlasskanal 6i dem Schmierstoffraum 4 zugeführt und über eine getriebeseitige Öffnung 17 von dem Schmierstoffraum 4 abgeführt wird. Fig. 6 zeigt in der oberen Hälfte der Zeichnung den Einbau einer Rücklaufsperre 15. Außerdem ist die unterschiedliche Ausführung der motorseitigen Abdichtung durch einen Wellendichtring 16 dargestellt.

Fig. 7 zeigt eine zweite Alternative, wobei Schmierstoff über einen Einlasskanal 6i dem Schmierstoffraum 4 zugeführt und über einen Auslasskanal 6o von dem Schmierstoffraum 4 abgeführt wird. In der oberen und unteren Hälfte der Fig. 7 ist der ringförmige Schmierstoffraum 4 für die Schmierstoffaufnahme radial innen durch die Adapterwelle 7 begrenzt. Radial außen ist der Schmierstoffraum 4 durch einen die Adapterwelle 7 umgebenden und an den Adaptern 2A, 2B anliegenden Zwischenring 10 begrenzt, wobei der Zwischenring 10 zwischen einem Lageraußenring des getriebeseitigen Lagers 3A und dem Bund des motorseitigen Adapters 2B sitzt. Zur Abdichtung des Zwischenrings 10 gegen die Adapter 2A, 2B ist zwischen dem Zwischenring 10 und jeweils einem Adapter 2A, 2B ein O-Ring 14 eingesetzt.

In beiden Varianten ist radial außerhalb des Zwischenrings 10 ein Hohlraum 40a gebildet, in welchem sich kein Schmierstoff befindet. In dem motorseitigen Adapter 2B sind zwei Bohrungen 6i und 6o ausgebildet, je eine für die Schmierstoffzufuhr zu und den Schmierstoffablauf aus dem Schmierstoffraum 4 für die Schmierstoffaufnahme.

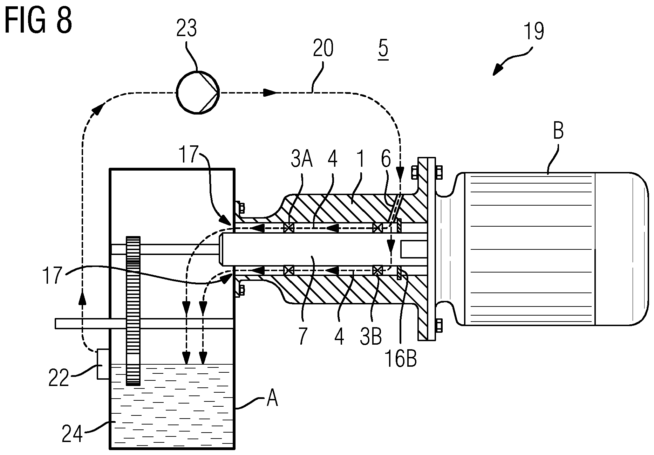

Fig. 8 zeigt eine teilweise als Schnitt dargestellte Seitenansicht einer Antriebsgruppe 19, umfassend eine in Schnitt dargestellte Getriebeeinheit A, eine in Seitenansicht dargestellte Motoreinheit B und eine zwischen dem Getriebe A und dem Motor B angeordnete Adapterbaugruppe 1 zur Kopplung von Motor B und Getriebe A im Schnitt. Die Adapterbaugruppe 1 kann einstückig ausgebildet oder aus zwei oder mehr miteinander verbundenen Adaptern gebildet sein, entlang deren koaxialen Längsachse eine in einem getriebeseitigen Lager 3A und einem motorseitigen Lager 3B angeordnete Adapterwelle 7 drehbar gelagert ist. Auf der Getriebeseite des getriebeseitigen Lagers 3A ist die Adapterwelle 7 ohne Abdichtung ausgebildet, um einen axialen Durchtritt von Schmiermittel durch das Lager 3A zu ermöglichen. Motorseitig erfolgt eine Abdichtung durch einen motorseitigen Wellendichtring 16B. Zwischen den beiden Lagern 3A, 3B ist ein die Adapterwelle 7 ringförmig umgebender Schmierstoffraum 4 gebildet, der mit dem getriebeseitigen Lager 3A und dem motorseitigen Lager 3B in Verbindung steht.

In der Adapterbaugruppe 1, vorzugsweise in einem motorseitigen Adapter 2B einer mehrteiligen Adapterbaugruppe 1, ist ein Einlasskanal 6i zur Zuführung von Schmierstoff von einem Außenraum 5 der Antriebsgruppe 19 zu dem Schmierstoffraum 4 ausgebildet, wobei der Einlasskanal 6i zwischen dem motorseitigen Wellendichtring 16B und dem motorseitigen Lager 3B in den Schmierstoffraum 4 mündet. Über eine getriebeseitige Öffnung 17 des getriebeseitigen Adapters 1, durch welche die Adapterwelle 7 des Adapters 1 mit der Getriebeeinheit A verbunden ist, kann Schmieröl von dem zur Aufnahme von Schmierstoff dienenden Schmierstoffraum 4, welcher die Adapterwelle 7 umgibt und mit den Lagern 3A, 3B in Verbindung steht, abgeführt und in die Getriebeeinheit A abgeleitet werden. Durch diese Ölführung wird das motorseitige Lager 3B und das getriebeseitige Lager 3A zwangsdurchströmt.

Das aus dem Schmierstoffraum 4 in die Getriebeeinheit A geleitete Schmieröl sammelt sich in einem Ölsumpf 24 der Getriebeeinheit A, gelangt von dort, z.B. über Spritzschmierung, zu einem Ölauslass in der Gehäusewand des Getriebegehäuses und von dort zu einem Ölfilter 22. Über eine externe Ölleitung 20, in der das Öl an die Umgebung Wärme abgeben kann, wird das Öl von dem Ölfilter 22 außenseitig der Antriebsgruppe 19 zu dem Einlasskanal 6i gefördert, beispielsweise mittels einer vorzugsweise von einer Getriebewelle angetriebenen Ölpumpe 23. Über den Einlasskanal 6i gelangt das gefilterte und gekühlte Öl erneut in den Schmierstoffraum 4 zur Aufnahme von Schmierstoff.

Auf diese Weise ist eine Umlaufschmierung realisierbar, die vorzugsweise in einen Schmierstoffversorgungskreislauf der Getriebeeinheit A integrierbar ist. Der Begriff Umlaufschmierung bezeichnet dabei einen Schmierstoffkreislauf mit einem Reservoir, z.B. einer Ölwanne oder einem Ölsumpf 24 in der Getriebeeinheit A, einer Schmierstoffzuführung, z.B. dem Einlasskanal 6i, zu den Schmierstellen der Adapterbaugruppe 1, insbesondere den Lagern 3A und 3B der Adapterwelle 7, und einer Rückführung des Schmierstoffs zu dem Reservoir, z.B. der Ableitung von Schmierstoff aus der Kupplungsadapterbaugruppe 1 über den Ablasskanal 6o.

Alternativ zu dem in Fig. 8 dargestellten Ausführungsbeispiel, bei dem die Abfuhr von Schmieröl über die getriebeseitige Öffnung 17 erfolgt, kann die Abfuhr auch durch einen eigens dafür ausgebildeten Auslasskanal 6o erfolgen. Der Auslasskanal 6o zur Abführung von Schmieröl von dem Schmierstoffraum 4 zu dem Außenraum 5 der Antriebsgruppe 19 kann im Falle einer mehrteiligen Bauweise der Adapterbaugruppe in dem getriebeseitigen Adapter 2A ausgebildet sein. Der Auslasskanal 6o kann dabei direkt in eine korrespondierende Einlassöffnung in der Gehäusewand des Getriebes A münden oder mittels einer Schmiermittelleitung mit dem Getriebe A verbunden sein. Analog sind auch alle anderen denkbaren Anordnungen der Kanäle in den getriebeseitigen und motorseitigen Adaptern 2A, 2B möglich.

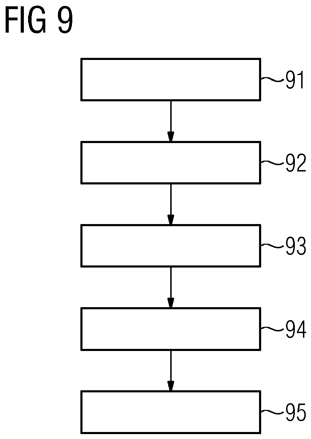

Fig. 9 zeigt eine Abfolge von Schritten zur Herstellung eines Schmierstoffkreislaufs in einer Antriebsgruppe 19, wie sie beispielsweise in Fig. 8 gezeigt ist. Die Antriebsgruppe 19 umfasst eine Adapterbaugruppe 1 zur Verbindung einer Getriebeeinheit A mit einer Motoreinheit B, sowie eine mit der Adapterbaugruppe 1 verbundene Getriebeeinheit A. Die Abfolge weist fünf Schritte auf.

In einem ersten Schritt 91 wird ein sich ringförmig um eine Adapterwelle 7der Adapterbaugruppe 1 erstreckender Schmierstoffraum 4 zur Aufnahme von Schmierstoff gebildet, wobei der Schmierstoffraum 4 mit mindestens einem Lager 3A, 3B, in dem die Adapterwelle 7 drehbar gelagert ist, in Verbindung steht, so dass der Schmierstoff von dem Schmierstoffraum 4 dem Lager 3A, 3B zuführbar ist. Als Schmierstoffraum 4 kann beispielsweise ein sich zwischen den Wellenlagern 3A, 3B und um die Welle 7 herum erstreckender Hohlraum verwendet werden.

In einem zweiten Schritt 92 wird eine die Adapterwelle 7 umgebenden Schmierstoffdichtung 16B auf einer Motorseite des Lagers 3B an geordnet, um den Schmierstoffraum 4 zur Motorseite der Adapterbaugruppe 1 hin abzudichten.

In einem dritten Schritt 93 wird eine Schmierstoffzuführung zu dem Schmierstoffraum 4 ausgebildet, mittels mindestens eines ersten Kanals 6i, durch welchen Schmierstoff von der Umgebung 5 der Adapterbaugruppe 1 dem Schmierstoffraum 4 zuführbar ist.

In einem vierten Schritt 94 wird eine Schmierstoffabführung von dem Schmierstoffraum 4 ausgebildet, mittels einer Verbindung 17 des Schmierstoffraums 4 zu der Getriebeseite der Adapterbaugruppe 1 über eine getriebeseitige Öffnung 17 der Adapterbaugruppe 1, über welche die Adapterwelle 7 auf der Getriebeseite der Adapterbaugruppe 1 zugänglich ist, und/oder über einen zweiten Kanal 6o.

In einem fünften Schritt 95 werden die Schmierstoffabführung und die Schmierstoffzuführung mittels einer Schmierstoffleitung 20 so miteinander verbunden, dass durch die Schmierstoffabführung aus der Adapterbaugruppe 1 abgeführter Schmierstoff über die Schmierstoffleitung 20 zu der Schmierstoffzuführung zurückgeführt werden kann. Der durch die Leitung 20 zur Schmierstoffzuführung zurückgeführte Schmierstoff, der während der Zurückfuhr vorzugsweise gekühlt und/oder gereinigt wurde, wird durch die Schmierstoffzuführung wieder in den Schmierstoffraum 4 der Adapterbaugruppe 1 geleitet.

Auf diese Weise ist in der Antriebsgruppe 19 ein umlaufender Schmierstoffkreislauf ausgebildet.

## Patentansprüche

1. Adapterbaugruppe (1) zur Verbindung einer Getriebeeinheit (A) und einer Motoreinheit (B), umfassend
- ein Adaptergehäuse (2A, 2B),
- mindestens ein in dem Adaptergehäuse (2A, 2B) sitzendes Lager (3A, 3B),
- eine in dem Lager (3A, 3B) drehbar gelagerte Adapterwelle (7) mit einer Wellenachse (45),
- mindestens einen sich ringförmig um die Adapterwelle (7) erstreckenden Schmierstoffraum (4) zur Aufnahme von Schmierstoff, wobei der Schmierstoffraum (4) mit dem Lager (3A, 3B) in Verbindung steht, so dass der Schmierstoff von dem Schmierstoffraum (4) dem Lager (3A, 3B) zuführbar ist, und
- eine auf der Motorseite des Lagers (3B) die Adapterwelle (7) umgebende Schmierstoffdichtung (16B) zur Abdichtung des Schmierstoffraums (4) zur Motorseite der Adapterbaugruppe (1) hin,
**dadurch gekennzeichnet, dass**
- die Adapterbaugruppe (1) mindestens einen ersten Kanal (6i) aufweist, durch welchen Schmierstoff von der Umgebung (5) der Adapterbaugruppe (1) dem Schmierstoffraum (4) zuführbar ist, und
- dass der Schmierstoffraum (4) über eine getriebeseitige Öffnung (17) der Adapterbaugruppe (1), über welche die Adapterwelle (7) auf der Getriebeseite der Adapterbaugruppe (1) zugänglich ist, eine Verbindung (17) zu der Getriebeseite der Adapterbaugruppe (1) aufweist und/oder die Adapterbaugruppe (1) einen zweiten Kanal (6o) aufweist, durch welchen Schmierstoff von dem Schmierstoffraum (4) in die Umgebung (5) der Adapterbaugruppe (1) abführbar ist.

2. Adapterbaugruppe (1) nach Anspruch 1, wobei die Adapterbaugruppe (1) ein getriebeseitiges Lager (3A) und ein motorseitiges Lager (3B) aufweist, wobei der Schmierstoffraum (4) mit beiden Lagern (3A, 3B) in Verbindung steht und die Schmierstoffdichtung (16B) auf der Motorseite des motorseitigen Lagers (3B) sitzt.

3. Adapterbaugruppe (1) nach einem der vorhergehenden Ansprüche, wobei der erste bzw. zweite Kanal (6i, 6o) quer zur Wellenachse (45) der Adapterwelle (7) durch das Adaptergehäuse (2A, 2B) verläuft.

4. Adapterbaugruppe (1) nach einem der vorhergehenden Ansprüche, wobei die Schmierstoffdichtung (16B) ein Wellendichtring ist.

5. Antriebsgruppe (19), umfassend eine Adapterbaugruppe (1) nach einem der vorhergehenden Ansprüche und eine Getriebeeinheit (A), die mit der Adapterbaugruppe (1) verbunden ist.

6. Antriebsgruppe (19) nach Anspruch 5, umfassend einen Schmierstoffkreislauf, der von dem ersten Kanal (6i) über das mindestens eine Lager (3A, 3B) und den Schmierstoffraum (4), die getriebeseitige Öffnung (17) und/oder den zweiten Kanal (6o), die Getriebeeinheit (A) und eine Schmierstoffleitung (20) zurück zum ersten Kanal (6i) verläuft.

7. Baukastensystem zum Ausbilden einer Adapterbaugruppe (1) nach einem der Ansprüche 1 bis 4, umfassend mehrere, zum Verbinden mit unterschiedlichen Getriebeeinheiten (A) geeignete, getriebeseitige Adapter (2A) mit je einem getriebeseitigen Lager (3A), mehrere jeweils mit mindestens einem der getriebeseitigen Adapter (2A) verbindbare, zum Verbinden mit unterschiedlichen Motoreinheiten (B) geeignete, motorseitige Adapter (2B) mit je einem motorseitigen Lager (3B), und Adapterwellen (7) zur jeweiligen drehbaren Lagerung in den Lagern (3A, 3B).

8. Verfahren zur Herstellung eines Schmierstoffkreislaufs in einer Antriebsgruppe (19), umfassend eine Adapterbaugruppe (1) zur Verbindung einer Getriebeeinheit (A) und einer Motoreinheit (B) und eine mit der Adapterbaugruppe (1) verbundene Getriebeeinheit (A), umfassend folgende Schritte:
- Ausbilden eines sich ringförmig um eine Adapterwelle (7) der Adapterbaugruppe (1) erstreckenden Schmierstoffraums (4) zur Aufnahme von Schmierstoff, wobei der Schmierstoffraum (4) mit mindestens einem Lager (3A, 3B), in dem die Adapterwelle (7) drehbar gelagert ist, in Verbindung steht, so dass der Schmierstoff von dem Schmierstoffraum (4) dem Lager (3A, 3B) zuführbar ist;
- Anordnen einer die Adapterwelle (7) umgebenden Schmierstoffdichtung (16B) auf einer Motorseite des Lagers (3B) zur Abdichtung des Schmierstoffraums (4) zur Motorseite der Adapterbaugruppe (1) hin;
- Ausbilden einer Schmierstoffzuführung zu dem Schmierstoffraum (4) mittels mindestens eines ersten Kanals (6i), durch welchen Schmierstoff von der Umgebung (5) der Adapterbaugruppe (1) dem Schmierstoffraum (4) zuführbar ist;
- Ausbilden einer Schmierstoffabführung von dem Schmierstoffraum (4) mittels einer Verbindung (17) des Schmierstoffraums (4) zu der Getriebeseite der Adapterbaugruppe (1) über eine getriebeseitige Öffnung (17) der Adapterbaugruppe (1), über welche die Adapterwelle (7) auf der Getriebeseite der Adapterbaugruppe (1) zugänglich ist, und/oder über einen zweiten Kanal (6o); und
- Verbinden der Schmierstoffabführung und der Schmierstoffzuführung mittels einer Schmierstoffleitung (20).

9. Verfahren nach Anspruch 8, wobei der Schmierstoffkreislauf durch die Getriebeeinheit (A), insbesondere durch einen Ölsumpf (24) der Getriebeeinheit (A), führt.

## Claims

1. Adapter assembly (1) for connecting a transmission unit (A) to a motor unit (B), comprising
- an adapter housing (2A, 2B),
- at least one bearing (3A, 3B) which is situated in the adapter housing (2A, 2B),
- an adapter shaft (7) which has a shaft axis (45) and is rotatably supported in the bearing (3A, 3B),
- at least one lubricant chamber (4) which extends annularly around the adapter shaft (7) and is provided for the purpose of holding lubricant, wherein the lubricant chamber (4) is connected to the bearing (3A, 3B) in such a way that the lubricant can be supplied from the lubricant chamber (4) to the bearing (3A, 3B), and
- a lubricant seal (16B) which surrounds the adapter shaft (7) on the motor side of the bearing (3B) and is provided for the purpose of sealing the lubricant chamber (4) relative to the motor side of the adapter assembly (1),
**characterised in that**
- the adapter assembly (1) has at least one first channel (6i) through which lubricant can be supplied from the environment (5) of the adapter assembly (1) to the lubricant chamber (4), and that
- the lubricant chamber (4) has a connection (17) to the transmission side of the adapter assembly (1), via a transmission-side opening (17) in the adapter assembly (1), said opening (17) giving access to the adapter shaft (7) on the transmission side of the adapter assembly (1), and/or the adapter assembly (1) has a second channel (6o), through which lubricant can be drained from the lubricant chamber (4) into the environment (5) of the adapter assembly (1).

2. Adapter assembly (1) according to claim 1, wherein the adapter assembly (1) has a transmission-side bearing (3A) and a motor-side bearing (3B), wherein the lubricant chamber (4) is connected to both bearings (3A, 3B) and the lubricant seal (16B) is situated on the motor side of the motor-side bearing (3B).

3. Adapter assembly (1) according to one of the preceding claims, wherein the first and/or second channel (6i, 6o) runs transversely through the adapter housing (2A, 2B) relative to the shaft axis (45) of the adapter shaft (7).

4. Adapter assembly (1) according to one of the preceding claims, wherein the lubricant seal (16B) is a shaft sealing ring.

5. Drive group (19) comprising an adapter assembly (1) according to one of the preceding claims and a transmission unit (A) which is connected to the adapter assembly (1).

6. Drive group (19) according to claim 5, comprising a lubricant circuit which runs from the first channel (6i) via the at least one bearing (3A, 3B) and the lubricant chamber (4), the transmission-side opening (17) and/or the second channel (6o), the transmission unit (A) and a lubricant line (20) back to the first channel (6i).

7. Modular system for producing an adapter assembly (1) according to one of claims 1 to 4, comprising a plurality of transmission-side adapters (2A) which are suitable for connecting to different transmission units (A) and each have a transmission-side bearing (3A), a plurality of motor-side adapters (2B) which can be connected to at least one of the transmission-side adapters (2A) in each case and are suitable for connecting to different motor units (B) and each have a motor-side bearing (3B), and adapter shafts (7) which are rotatably supported in the respective bearings (3A, 3B).

8. Method for manufacturing a lubricant circuit in a drive group (19), which comprises an adapter assembly (1) for connecting a transmission unit (A) to a motor unit (B) and a transmission unit (A) that is connected to the adapter assembly (1), comprising steps as follows:
- forming a lubricant chamber (4) which extends annularly around an adapter shaft (7) of the adapter (1) and is provided for the purpose of holding lubricant, wherein the lubricant chamber (4) is connected to at least one bearing (3A, 3B) in which the adapter shaft (7) is rotatably supported, such that the lubricant can be supplied from the lubricant chamber (4) to the bearing (3A, 3B);
- arranging a lubricant seal (16B), which surrounds the adapter shaft (7), on a motor side of the bearing (3B) for the purpose of sealing the lubricant chamber (4) relative to the motor side of the adapter assembly (1);
- forming a lubricant supply to the lubricant chamber (4) by means of at least one first channel (6i), through which lubricant can be supplied from the environment (5) of the adapter assembly (1) to the lubricant chamber (4);
- forming a lubricant drain from the lubricant chamber (4) by means of a connection (17) of the lubricant chamber (4) to the transmission side of the adapter assembly (1) via a transmission-side opening (17) of the adapter assembly (1), said opening (17) giving access to the adapter shaft (7) on the transmission side of the adapter assembly (1), and/or via a second channel (6o); and
- connecting the lubricant drain and the lubricant supply by means of a lubricant line (20).

9. Method according to claim 8, wherein the lubricant circuit passes through the transmission unit (A), in particular through an oil sump (24) of the transmission unit (A).

## Revendications

1. Module ( 1 ) d'adaptateur pour relier un groupe ( A ) de transmission et un groupe ( B ) moteur, comprenant
- un boîtier ( 2A, 2B ) d'adaptateur,
- au moins un palier ( 3A, 3B ) reposant dans le boîtier ( 2A, 2B ) d'adaptateur,
- un arbre ( 7 ) d'adaptateur, monté tournant dans le palier ( 3A, 3B ) et ayant un axe ( 45 ),
- au moins un espace ( 4 ) à lubrifiant, qui s'étend annulairement autour de l'arbre ( 7 ) de l'adaptateur et qui est destiné à recevoir du lubrifiant, l'espace ( 4 ) de lubrifiant étant en liaison avec le palier ( 3A, 3B ), de manière à pouvoir envoyer le lubrifiant de l'espace ( 4 ) de lubrifiant au palier ( 3A, 3B ) et
- une étanchéité ( 16B ) au lubrifiant, qui entoure l'arbre ( 7 ) de l'adaptateur du côté moteur du palier ( 3B ) et qui est destinée à rendre étanche l'espace ( 4 ) de lubrifiant en direction du côté moteur du module ( 1 ) d'adaptateur,
**caractérisé en ce que**
- le module ( 1 ) d'adaptateur a au moins un premier conduit ( 6i ), par lequel du lubrifiant peut être envoyé de ce qui entoure ( 5 ) le module ( 1 ) d'adaptateur à l'espace ( 4 ) de lubrifiant et
- **en ce que** l'espace ( 4 ) de lubrifiant a, par une ouverture ( 17 ), du côté de la transmission, du module ( 1 ) de l'adaptateur, par laquelle l'arbre ( 7 ) de l'adaptateur est accessible du côté de la transmission du module ( 1 ) de l'adaptateur, une liaison ( 17 ) avec le côté de transmission du module ( 1 ) d'adaptateur et/ou le module ( 1 ) d'adaptateur a un deuxième conduit ( 6o ), par lequel du lubrifiant peut être évacué de l'espace ( 4 ) de lubrifiant à ce qui entoure ( 5 ) le module ( 1 ) d'adaptateur.

2. Module ( 1 ) d'adaptateur suivant la revendication 1, dans lequel le module ( 1 ) d'adaptateur a un palier ( 3A ) du côté de la transmission et un palier ( 3B ) du côté du moteur, l'espace ( 4 ) de lubrifiant étant en communication avec les deux paliers ( 3A, 3B ) et l'étanchéité ( 16B ) au lubrifiant étant mise du côté moteur du palier ( 3b ) côté moteur.

3. Module ( 1 ) suivant l'une des revendications précédentes, dans lequel le premier ou le deuxième conduit ( 6i, 6o ) s'étend transversalement à l'axe ( 45 ) de l'arbre ( 7 ) de l'adaptateur à travers le boîtier ( 2A, 2B ) de l'adaptateur.

4. Module ( 1 ) suivant l'une des revendications précédentes, dans lequel l'étanchéité ( 16B ) au lubrifiant est une bague d'étanchéité d'arbre.

5. Groupe ( 19 ) d'entraînement, comprenant un module ( 1 ) d'adaptateur suivant l'une des revendications précédentes, et un groupe ( A ) de transmission, qui est relié au module ( 1 ) d'adaptateur.

6. Groupe ( 19 ) d'entraînement suivant la revendication 5, comprenant un circuit de lubrifiant, qui s'étend du premier conduit ( 6i ) en passant par le au moins un palier ( 3A, 3B ) et l'espace ( 4 ) de lubrifiant, l'ouverture ( 17 ) du côté de la transmission et/ou le deuxième conduit ( 6o ), le groupe ( A ) de transmission et un conduit ( 20 ) pour du lubrifiant, en revenant au premier conduit ( 6i ).

7. Système modulaire de constitution d'un module ( 1 ) d'adaptateur suivant l'une des revendications 1 à 4, comprenant plusieurs adaptateurs ( 2A ) du côté de la transmission, propres à se relier à des groupes ( A ) de transmission différents et ayant chacun un palier ( 3A ) du côté de la transmission, plusieurs adaptateurs ( 2B ) côté moteur pouvant être reliés respectivement à au moins l'un des adaptateurs ( 2A ) du côté de la transmission et propres à se relier à des groupes ( B ) moteur différents et ayant chacun un palier ( 3B ) côté moteur et des arbres ( 7 ) d'adaptateur pour le montage tournant dans les paliers ( 3A, 3B ).

8. Procédé de production d'un circuit de lubrifiant dans un groupe ( 19 ) d'entraînement, comprenant un module ( 1 ) d'adaptateur pour relier un groupe ( A ) de transmission et un groupe ( B ) moteur, et une unité ( A ) de transmission reliée au module ( 1 ) d'adaptateur, comprenant les stades suivants :
- constitution d'un espace ( 4 ) de lubrifiant, s'étendant annulairement autour d'un arbre ( 7 ) d'adaptateur du module ( 1 ) d'adaptateur et destiné à la réception de lubrifiant, l'espace ( 4 ) de lubrifiant étant en liaison avec au moins un palier ( 3A, 3B ), dans lequel l'arbre ( 7 ) d'adaptateur est monté tournant, de manière à ce que le lubrifiant puisse être envoyé de l'espace ( 4 ) de lubrifiant au palier ( 3A, 3B ) ;
- montage d'une étanchéité ( 16B ) au lubrifiant, entourant l'arbre ( 7 ) d'adaptateur, d'un côté moteur du palier ( 3B ), pour rendre étanche l'espace ( 4 ) de lubrifiant, en direction du côté moteur du module ( 1 ) d'adaptateur ;
- Constitution d'une amenée de lubrifiant à l'espace ( 4 ) de lubrifiant, au moyen d'au moins un premier conduit ( 6i ), par lequel du lubrifiant peut être envoyé de ce qui entoure ( 5 ) le module ( 1 ) d'adaptateur à l'espace ( 4 ) de lubrifiant ;
- Constitution d'une évacuation de lubrifiant de l'espace ( 4 ) de lubrifiant, au moyen d'une liaison ( 17 ) de l'espace ( 4 ) de lubrifiant, vers le côté de transmission du module ( 1 ) d'adaptateur, par l'intermédiaire d'une ouverture ( 17 ) du côté de la transmission du module ( 1 ) d'adaptateur, par laquelle l'arbre ( 7 ) de l'adaptateur est accessible du côté de la transmission du module ( 1 ) de l'adaptateur et/ou par un deuxième conduit ( 6o ) et
- liaison de l'évacuation du lubrifiant et de l'amenée du lubrifiant, au moyen d'un conduit ( 20 ) pour du lubrifiant.

9. Procédé suivant la revendication 8, dans lequel le circuit de lubrifiant passe par le groupe ( A ) de transmission, notamment par un puisard ( 24 ) du groupe ( A ) de transmission.
